# EUROPEAN PATENT APPLICATION

(11) **EP 2 887 689 A1**
(43) Date of publication of application: **24.06.2015**
(21) Application number: 14800798.2
(22) Date of filing: 16.01.2014
(51) Int. Cl.: H04N 21/658, H04N 21/238, H04N 21/472, H04N 21/858, H04L 29/08

(54) **METHOD, SERVER, AND TERMINAL FOR CONTROLLING CLOUD SHARING OF TERMINAL DATA**

(30) Priority: 21.05.2013 CN 201310191413
(71) Applicant: Shenzhen TCL New Technology Co., LTD, Shenzhen, Guangdong 518052 (CN)
(72) Inventor: ZHANG, Hai, Shenzhen Guangdong 518052 (CN)
(74) Representative: Kuhnen & Wacker
(86) International application number: PCT/CN2014/070731
(87) International publication number: WO 2014/187158

(57) **Abstract**

The present disclosure provides a controlling method for cloud sharing of terminal data, including: a server receiving sharing information sent by a first terminal, sending the sharing information to a second terminal, and receiving interaction information sent from the second terminal; the sever delaying pushing sharing content corresponding to the sharing information when the sharing information received by the server is a delay response command; and when a preset condition is satisfied, the server sending the sharing content or a link of the sharing content corresponding to the sharing information to the second terminal. The present disclosure prevents the user from missing the sharing content corresponding to the sharing information shared by other users. The present disclosure further provides a server and a terminal implementing the controlling method for cloud sharing of terminal data.

## Description

### BACKGROUND

### 1. Technical Field

The present disclosure relates to telecommunication technology, and particularly, to a controlling method, a server, and a terminal for cloud sharing of terminal data.

### 2. Description of Related Art

At present, network video on demand systems are well known by people. The network video on demand system can recommend the most popular programs to network users based on click rates of the video programs. However, in most methods recommending programs to users, the reference informs the user of a certain program which is being played through some method and the user can only passively choose to watch the recommended program without other choices. At this time, if the user is watching the favorite program and does not switch the channel, the user may miss the recommended program.

### SUMMARY

One object of the present disclosure is to provide a controlling method for cloud sharing of terminal data, preventing the user from missing the sharing content when the user delays watching the sharing content corresponding to the sharing information shared by other users.

Furthermore, the present disclosure provides a server and a terminal implementing the controlling method for cloud sharing of terminal data, preventing the user from missing the sharing content when the user delays watching the sharing content corresponding to the sharing information shared by other users.

The controlling method for cloud sharing of terminal data, including following steps: a server receiving sharing information sent by a first terminal, sending the sharing information to a second terminal, and receiving interaction information sent by the second terminal; the sever delaying pushing sharing content corresponding to the sharing information when the sharing information received by the server is a delayed response command; and when a preset condition is satisfied, the server sending the sharing content or a link of the sharing content corresponding to the sharing information to the second terminal.

Preferably, the preset condition includes regular trigger of delayed push of the sharing content defaulted by the server, regular trigger of delayed push of the sharing content submitted by user, or trigger of the sharing content requested by the second terminal.

Preferably, the controlling method further includes following steps after the step that the sever delaying pushing sharing content corresponding to the sharing information when the sharing information received by the server is a delayed response command:
the server recording live audio and video of the sharing content corresponding to the sharing information; and
the server detecting a stop command sent by the first terminal, and stopping recording the live audio and video of the sharing content corresponding to the sharing information on receiving the stop command.

Preferably, the controlling method further includes the following step after the step that the server recording live audio and video of the sharing content corresponding to the sharing information:
in the case that the server does not receive the stop command and a maximum recording duration preset by the server is reached, the server stopping recording the live audio and video of the sharing content corresponding to the sharing information to generate a to-be-shared audiovisual file.

Preferably, the controlling method further includes the following step after the step that the server recording live audio and video of the sharing content corresponding to the sharing information:
the server detecting a sharing duration controlling command sent by the first terminal; when a sharing duration corresponding to the sharing duration controlling command is reached, the server stopping recording the live audio and video of the sharing content corresponding to the sharing information to generate a to-be-shared audiovisual file.

Preferably, the controlling method further includes the following step before the step that the server recording live audio and video of the sharing content corresponding to the sharing information:
the server sending feedback information which indicates the starting of the recording of the live audio and video of the sharing content corresponding to the sharing information to the first terminal.

Preferably, the step that when a preset condition is satisfied, the server sending the sharing content or a link of the sharing content corresponding to the sharing information to the second terminal includes:
the server detecting whether the second terminal is online;
when the second terminal is online, the server sending the sharing content or the link of the sharing content corresponding to the sharing information to the second terminal; when the second terminal is offline, the server waiting until the second terminal is online to send the sharing content or the link of the sharing content corresponding to the sharing information to the second terminal.

Preferably, the controlling method further includes the following step before the step that the sever delaying pushing sharing content corresponding to the sharing information when the sharing information received by the server is a delayed response command:
the second terminal detecting, receiving, and processing a processing controlling signal of the sharing information from user;
when detecting an immediate channel switching command or an immediate page switching command based on the sharing information from user, the second terminal extracting channel information or connection information from the sharing information to switch the channel or page and sending a command indicating immediate response to the sharing information to the server;
when detecting a delayed channel switching command or a delayed page switching command based on the sharing information from user, the second terminal sending a command indicating delayed response to the sharing information to the server.

Preferably, the step that when detecting an immediate channel switching command or an immediate page switching command based on the sharing information from user, the second terminal extracting channel information or connection information from the sharing information includes:
when detecting the immediate channel switching command or the immediate page switching command based on the sharing information from user, the second terminal extracting a channel name from the sharing information and determining whether the channel corresponding to the extracted channel name is valid;
when the channel corresponding to the extracted channel name is valid, the second terminal looking up an identification number of a local channel according to the extracted channel name and switching the current channel to the one corresponding to the identification number.

Preferably, the controlling method further includes the following step after the step that when detecting the immediate channel switching command or the immediate page switching command based on the sharing information from user, the second terminal extracting a channel name from the sharing information and determining whether the channel corresponding to the extracted channel name is valid:
when the channel corresponding to the extracted channel name is invalid, the second terminal outputting an alert indicating that the channel switching operation is invalid.

The server is applied to implement the above controlling method for cloud sharing of terminal data, wherein the server includes an information transceiver and a data processor; the information transceiver includes an information sending unit and an information receiving unit;
the information sending unit is configured to send the sharing information to the second terminal when the information receiving unit receives the sharing information sent by the first terminal;
the information receiving unit is configured to receive the interaction information sent by the second terminal;
the data processor is configured to delay pushing the sharing content corresponding to the sharing information when the received interaction information is the delayed response command; and
the information sending unit is further configured to send the sharing content or the link of the sharing content corresponding to the sharing information to the send terminal when the preset condition is satisfied.

Preferably, the preset condition includes regular trigger of delayed push of the sharing content defaulted by the server, regular trigger of delayed push of the sharing content submitted by user, or trigger of the sharing content requested by the second terminal.

Preferably, the data processor includes a recording unit and a record controlling unit, the information transceiver further includes a detecting unit; the recording unit is configured to record live audio and video of the sharing content corresponding to the sharing information; the detecting unit is configured to detect and receive a stop command sent by the first terminal; the record controlling unit is configured to stop recording the live audio and video of the sharing content corresponding to the sharing information to generate a to-be-shared audiovisual file on receiving the stop command.

Preferably, the server further includes a setting unit; the setting unit is configured to preset a maximum recording duration; the record controlling unit is further configured to stop recording the live audio and video of the sharing content corresponding to the sharing information to generate the to-be-shared audiovisual file in the case that the server does not receive the stop command and the maximum recording duration is reached.

Preferably, the detecting unit is further configured to detect and receive a sharing duration controlling command sent by the first terminal; the record controlling unit is configured to stop recording the live audio and video of the sharing content corresponding to the sharing information to generate the to-be-shared audiovisual file when the sharing duration controlling command is received and a sharing duration corresponding to the sharing duration controlling command is reached.

Preferably, the information sending unit is further configured to send feedback information to the first terminal indicating the starting of the recording of the live audio and video of the sharing content corresponding to the sharing information.

Preferably, the detecting unit is configured to detect whether the second terminal is online; when the second terminal is online, the information sending unit is configured to send the sharing content or the link of the sharing content corresponding to the sharing information to the second terminal; when the second terminal is offline, the information sending unit is configured to wait until the second terminal is online to send the sharing content or the link of the sharing content to the second terminal.

The terminal is applied to implement the above controlling method for cloud sharing of terminal data, wherein the terminal includes:
a data transceiver, configured to receive sharing information and sharing content and send interaction information;
a user interaction unit, configured to detect, receive, and process a processing controlling signal of the sharing information from user;
a channel processing unit, configured to extract channel information from the sharing information and immediately respond to the channel switching operation when an immediate channel switching command based on the sharing information from user is detected, and send a command indicating immediate response to the sharing information to the server; and
the data transceiver is further configured to send a command indicating delayed response to the sharing information to the server when a delayed channel switching command or a delayed page switching command based on the sharing information from user is received.

Preferably, the channel processing unit is further configured to extract a channel name from the sharing information and determines whether the channel corresponding to the channel name is valid when the data transceiver detects a channel switching command based on the sharing information from user; when the channel corresponding to the channel name is valid, the channel processing unit looks up an identification number of a local channel according to the channel name, and switches the current channel to the one corresponding to the identification number.

Preferably, the channel processing unit is further configured to output an alert indicating that the channel switching operation is invalid when the channel corresponding to the channel name is invalid.

Compared with the existing technology, in the present disclosure, by controlling cloud sharing of the terminal data, the server delays pushing the sharing content corresponding to the sharing information on receiving the delayed response command; when the preset condition is satisfied, the server sends the sharing content or the link of the sharing content corresponding to the sharing information to the second terminal, thereby the user may not miss the sharing contents from other users.

### DESCRIPTION OF THE DRAWINGS

FIG. 1 is a flow chart of a controlling method for cloud sharing of terminal data in accordance with a first embodiment of the present disclosure;
FIG. 2 is a flow chart of a controlling method for cloud sharing of terminal data in accordance with a second embodiment of the present disclosure;
FIG. 3 is a flow chart of a controlling method for cloud sharing of terminal data in accordance with a third embodiment of the present disclosure;
FIG. 4 is a flow chart of a controlling method for cloud sharing of terminal data in accordance with a fourth embodiment of the present disclosure;
FIG. 5 is a server implementing a controlling method for cloud sharing of terminal data in accordance with a first embodiment of the present disclosure;
FIG. 6 is a schematic view of a data processor of the server of FIG. 5;
FIG. 7 is a server implementing a controlling method for cloud sharing of terminal data in accordance with a second embodiment of the present disclosure; and
FIG. 8 is a terminal implementing a controlling method for cloud sharing of terminal data in accordance with an embodiment of the present disclosure.

Realization of the object of the present disclosure, features and advantages of the technical solution of the present disclosure are give in further detail with reference to the accompanying drawings.

### DETAILED DESCRIPTION

It should be understood that the embodiments described herein are only used to explain the present disclosure rather than to limit the present disclosure.

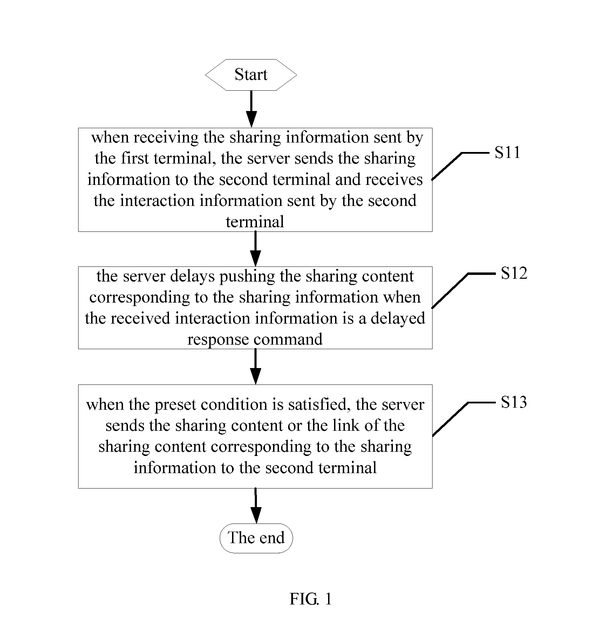

Referring to FIG. 1, the present disclosure provides a controlling method for cloud sharing of terminal data in accordance with a first embodiment.

It is noted that FIG. 1 only shows an embodiment of the controlling method; one skill in the art should know that any embodiment construed based on the spirit of the present disclosure should not depart from the scope covered by the technical solutions disclosed in the following embodiments.

After receiving sharing information sent by a first terminal, the server sends the sharing information to a second terminal and receives interaction information sent by the second terminal; if the received interaction information by the server is a delayed response command, the server delays pushing the sharing content corresponding to the sharing information; when a preset condition is satisfied, the server sends the sharing content or a link of the sharing content corresponding to the sharing information to the second terminal.

The process is given in detail as follows.

At step S11, when receiving the sharing information sent by the first terminal, the server sends the sharing information to the second terminal and receives the interaction information sent by the second terminal. The terminal builds the communication connection relationship between a sending terminal of the sharing information which is the first terminal and a receiving terminal of the sharing information which is the second terminal according to communication identifications of the first terminal and the second terminal, thus, the transmission of the sharing information from one terminal to another terminal is realized. The communication identification refers to the unique identification data (eg., IP of the terminal) which communicates with the first terminal or the second terminal. In the embodiment, the first terminal is the sending terminal of the sharing information and the second terminal is the receiving terminal of the sharing information. In other embodiments, the second terminal may be configured to be the sending terminal of the sharing information and the first terminal may be configured to be the receiving terminal of the sharing information.

Preferably, the sharing content corresponding to the sharing information may be live audio and video, including television programs and radio broadcasts, unlive movies, or multimedia contents such as micro-blogs. The second terminal detects and responds to a processing controlling signal of the sharing information from the user (the user sends the command based on the sharing information through remote control operation). When the second terminal detects an immediate channel switching command based on the sharing information from the user, the second terminal extracts channel information from the sharing information, sends a command indicating immediate response to the sharing information to the server, and at the same time switches the channel. When the second terminal detects a delayed channel switching command or a delayed page switching command based on the sharing information from the user, the second terminal sends a command indicating delayed response to the sharing information to the server. When the second terminal detects a response refusing command based on the sharing information from the user, the second terminal sends a command indicating refusing response to the sharing information to the server.

In the embodiment, the way of switching the channel can be: when the second terminal detects the immediate channel switching command based on the sharing information from the user, the second terminal extracts the channel name from the sharing information, determines whether the channel corresponding to the extracted channel name is valid; when the channel corresponding to the extracted channel name is valid, the second terminal looks up an identification number of the corresponding local channel according to the extracted channel name and switches the current channel to the one corresponding to the identification number; when the channel corresponding to the extracted channel name is invalid, the second terminal outputs an alert indicating that the channel switching operation is invalid. The identification number corresponds to a playable channel of the terminal. A mapping table reflecting the relationship between each identification number and the corresponding valid channel is restored in the terminal, and the information whether the channel is valid or not is stored in the mapping table. The terminal determines whether the channel corresponding to the extracted channel name is valid by analyzing whether the extracted channel name is in the mapping table.

In the embodiment, both the first terminal and the second terminal are televisions; in other embodiments, the first terminal and the second terminal can be any electronic terminal which is capable of responding to the sharing information, such as a personal computer, a smart mobile phone, a tablet computer.

Step S12, the server delays pushing the sharing content corresponding to the sharing information when the received interaction information is a delayed response command.

In the embodiment, when the received interaction information is a delayed response command, the server delays pushing the sharing content corresponding to the sharing information.

Preferably, when the interaction information received by the server is an immediate response command, the server sends the sharing content or a link of the sharing content to the second terminal immediately; when the interaction information received by the server is a response refusing command, the servers ends the sharing of the terminal data.

Preferably, the sharing content corresponding to the sharing information is live audio and video such as television programs and radio broadcasts. In other embodiments, the sharing content can also be unlive movies or multi-media contents like micro-blogs.

Step S13, when the preset condition is satisfied, the server sends the sharing content or the link of the sharing content corresponding to the sharing information to the second terminal.

The preset condition can be one of the followings: regular trigger of delayed push of the sharing content defaulted by the server, regular trigger of delayed push of the sharing content submitted by the user, and trigger of the sharing content requested by the second terminal.

In detail, when the preset condition is satisfied, the server detects whether the second terminal is online; when the second terminal is online, the server sends the sharing content or the link of the sharing content to the second terminal; when the second terminal is offline, the server waits until the second terminal is online to send the sharing content or the link of the sharing content to the second terminal.

In the embodiment, by controlling cloud sharing of the terminal data, the server delays pushing the sharing content corresponding to the sharing information on receiving the delayed response command; when the preset condition is satisfied, the server sends the sharing content or the link of the sharing content corresponding to the sharing information to the second terminal, thereby the user may not miss the sharing contents from other users.

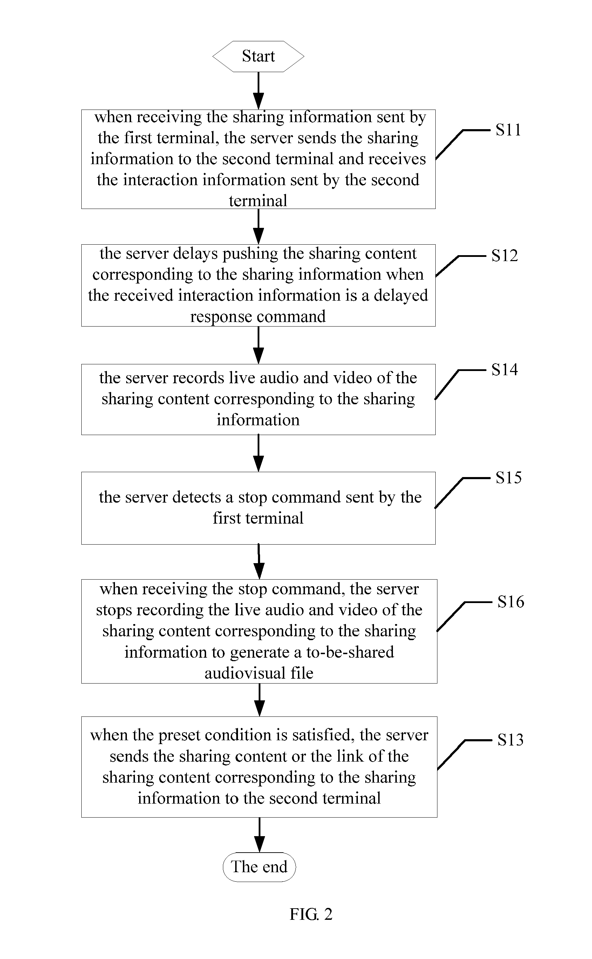

As shown in FIG. 2, which is a flow chart of a controlling method for cloud sharing of terminal data in accordance with a second embodiment of the present disclosure, based on the first embodiment, the method of the second embodiment further includes steps S 14, step S 15, and step S16 after step S12 of the method of the first embodiment:
Step S14, the server records live audio and video of the sharing content corresponding to the sharing information. After the server begins to record the live audio and video of the sharing content, the server sends feedback information indicating the starting of the recording of the live audio and video of the sharing content to the first terminal.
Step S15, the server detects a stop command sent by the first terminal.
Step S16, when receiving the stop command, the server stops recording the live audio and video of the sharing content corresponding to the sharing information to generate a to-be-shared audiovisual file.

In the embodiment, when receiving the stop command sent by the first terminal, the server stops recording the live audio and video to generate the to-be-shared audiovisual file. In some embodiments, the to-be-shared audiovisual file can also be generated in the following way: the server detects and receives a sharing duration controlling command sent by the first terminal; when receiving the sharing duration controlling command sent by the first terminal, the server stops recording the live audio and video to generate the to-be-shared audiovisual file. In other embodiments, the to-be-shared audiovisual file can also be generated in the following way: a maximum recording duration is preset in the server, in the case that the server does not receive the stop command sent by the first terminal and the maximum recording duration is reached, the server stops recording the live audio and video of the sharing content to generate the to-be-shared audiovisual file.

By controlling the cloud sharing of the terminal data, the method of the embodiment is capable of recording the live audio and video of the sharing content corresponding to the sharing information when the user delays watching the sharing content corresponding to the sharing information; capable of stopping recording the live audio and video of the sharing content corresponding to the sharing information to generate the to-be-shared audiovisual file on receiving the stop command sent by the first terminal; capable of sending the to-be-shared audiovisual file or the link of the to-be-shared audiovisual file to the second terminal when the preset condition is satisfied, thereby the user may not miss the sharing contents from other users.

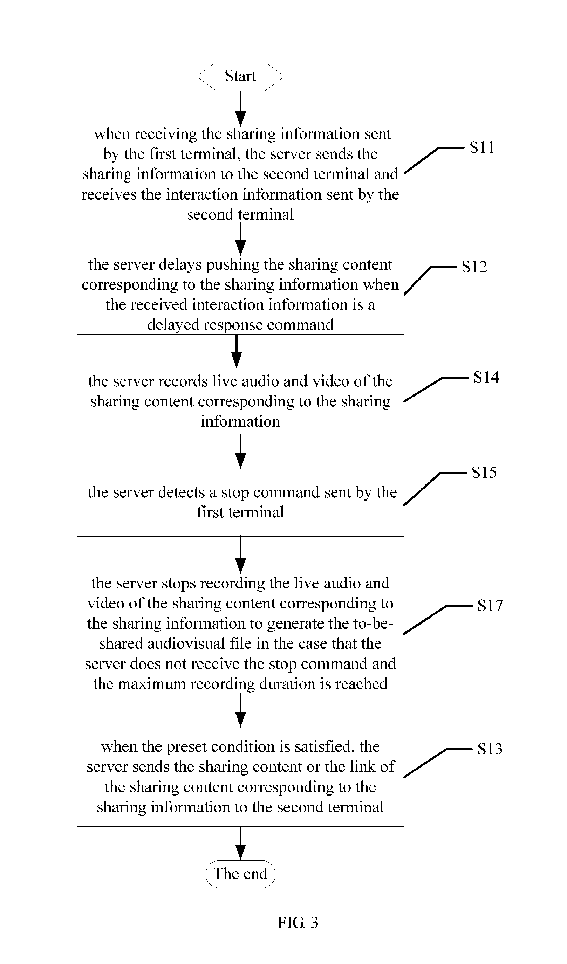

As shown in FIG. 3, which is a flow chart of a controlling method for cloud sharing of terminal data in accordance with a third embodiment of the present disclosure, based on the second embodiment, the method of the third embodiment further includes the following steps after step S15 of the method of the second embodiment:
step S17, the server stops recording the live audio and video of the sharing content corresponding to the sharing information to generate the to-be-shared audiovisual file in the case that the server does not receive the stop command and the maximum recording duration is reached.

The maximum recording duration can be, for example, three hours. If the time point when the server begins to record the audiovisual file is 1: 00 pm, then the maximum recording duration is reached at 4: 00 pm. When the maximum recording duration is reached, the server stops recording the live audio and video of the sharing content to generate the to-be-shared audiovisual file. In other embodiments, the maximum recording duration can be reached at 3: 00 pm, when the time point 3: 00 pm is reached, the server stops recording the live audio and video of the sharing content corresponding to the sharing information to generate the to-be-shared audiovisual file.

By controlling the cloud sharing of the terminal data, the method of the embodiment is capable of recording the live audio and video of the sharing content corresponding to the sharing information when the user delays watching the sharing content corresponding to the sharing information; capable of stopping recording the live audio and video of the sharing content corresponding to the sharing information to generate the to-be-shared audiovisual file when the maximum recording duration is reached; and capable of sending the to-be-shared audiovisual file or the link of the to-be-shared audiovisual file to the second terminal when the preset condition is satisfied, thereby the user may not miss the sharing contents from other users.

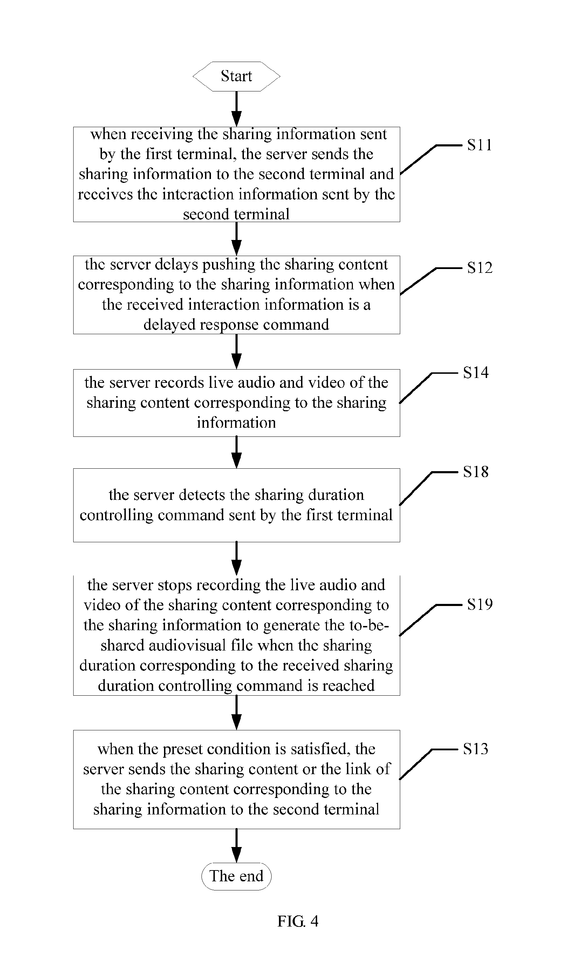

As shown in FIG. 4, which is a flow chart of a controlling method for cloud sharing of terminal data in accordance with a second embodiment of the present disclosure, based on the second embodiment, the method of the fourth embodiment further includes the following steps after step S14 of the method of the second embodiment:
step S18, the server detects the sharing duration controlling command sent by the first terminal; and
step S19, the server stops recording the live audio and video of the sharing content corresponding to the sharing information to generate the to-be-shared audiovisual file when the sharing duration corresponding to the received sharing duration controlling command is reached.

In the embodiment, the sharing duration can be controlled by the user, for example, the user can select the needed sharing duration by setting a dropdown list.

The sharing duration can be, for example, 3 hours. If the time point when the server begins to record the audiovisual file of the sharing content corresponding to the sharing information is 1: 00 pm, the sharing duration is reached at 4: 00 pm. When the maximum recording duration is reached, the server stops recording the live audio and video of the sharing content to generate the to-be-shared audiovisual file. In other embodiments, the sharing duration can be reached at time point 3: 00 pm; when the time point 3: 00 is reached, the server stops recording the live audio and video of the sharing content to generate the to-be-shared audiovisual file.

By controlling the cloud sharing of the terminal data, the method of the embodiment is capable of recording the live audio and video of the sharing content when the user delays watching the sharing content; capable of stopping recording the live audio and video of the sharing content to generate the to-be-shared audiovisual file when the sharing duration corresponding to the sharing duration controlling command is reached; and capable of sending the to-be-shared audiovisual file or the link of the to-be-shared audiovisual file to the second terminal when the preset condition is satisfied, thereby the user may not miss the sharing contents from other users.

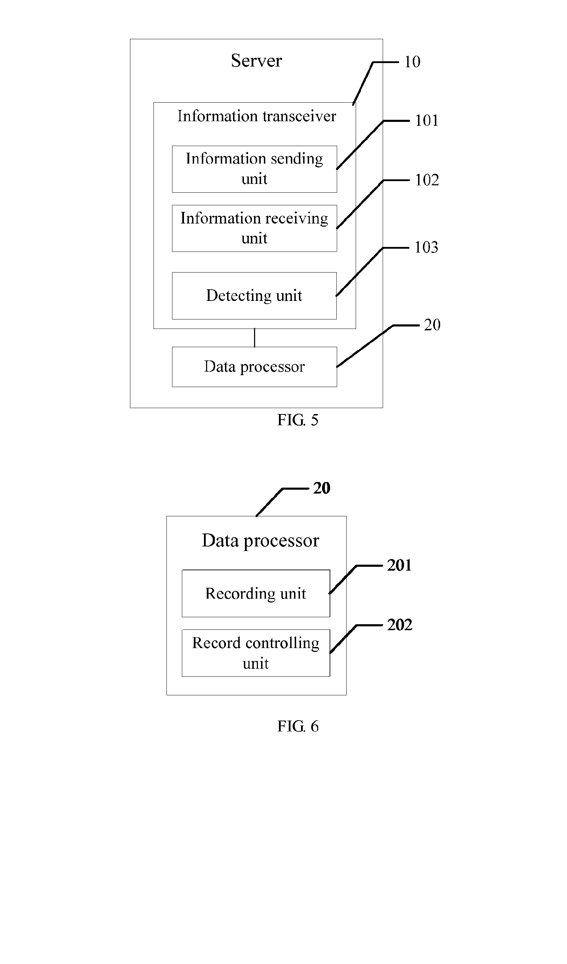

As shown in FIG. 5, which is a schematic view of a server implementing a controlling method for cloud sharing of terminal data in accordance with a first embodiment, the server includes an information transceiver 10 and a data processor 20. The information transceiver 10 includes an information sending unit 101, an information receiving unit 102, and a detecting unit 103.

The information sending unit 101 is configured to send the sharing information to a second terminal when the information receiving unit 102 receives the sharing information sent by a first terminal.

The data processor 20 builds a communication connection relationship between a sending terminal of the sharing information which is the first terminal and a receiving terminal of the sharing information which is the second terminal according to communication identifications of the first terminal and the second terminal, thus, the transmission of the sharing information from one terminal to another terminal is realized. The communication identification refers to the unique identification data (eg., IP of the terminal) communicating with the first terminal or the second terminal. In the embodiment, the first terminal is the sending terminal of the sharing information and the second terminal is the receiving terminal of the sharing information. In other embodiments, the first terminal may be the receiving terminal of the sharing information and the second terminal may be the sending terminal of the sharing information.

Preferably, the sharing content corresponding to the sharing information are live audio and video, including television programs and radio broadcasts, unlive movies, and multimedia contents such as micro-blogs. The second terminal detects and responds to a processing controlling signal of the sharing information from the user (the user sends the command based on the sharing information through remote control operation). When the second terminal detects an immediate channel switching command based on the sharing information from the user, the second terminal extracts channel information from the sharing information, sends a command indicating immediate response to the sharing information to the server, and at the same time switches the channel. When the second terminal detects a delayed channel switching command or a delayed page switching command based on the sharing information from the user, the second terminal sends a command indicating delayed response to the sharing information to the server. When the second terminal detects a response refusing command based on the sharing information from the user, the second terminal sends a command indicating refusing response to the sharing information to the server.

In the embodiment, the way of switching the channel can be: when the second terminal detects the immediate channel switching command based on the sharing information from the user, the second terminal extracts the channel name from the sharing information, determines whether the channel corresponding to the extracted channel name is valid; when the channel corresponding to the extracted channel name is valid, the second terminal looks up an identification number of the corresponding local channel according to the extracted channel name and switches the current channel to the one corresponding to the identification number; when the channel corresponding to the extracted channel name is invalid, the second terminal outputs an alert indicating that the channel switching operation is invalid. The identification number corresponds to a playable channel of the terminal. A mapping table reflecting the relationship between each identification number and the corresponding valid channel is restored in the terminal, and the information whether the channel is valid or not is stored in the mapping table. The terminal determines whether the channel corresponding to the extracted channel name is valid by analyzing whether the extracted channel name is in the mapping table.

In the embodiment, the second terminal is preferably a television; in other embodiments, the second terminal can be any electronic terminal which is capable of responding to the sharing information, such as a personal computer, a smart mobile phone, a tablet computer.

The information receiving unit 102 is configured to receive interaction information sent by the second terminal.

The data processor 20 is configured to delay pushing the sharing content corresponding to the sharing information when the received interaction information is a delayed response command.

The information sending unit 101 is further configured to, when a preset condition is satisfied, send the sharing content or the link of the sharing content corresponding to the sharing information to the second terminal. The preset condition includes one of the followings: regular trigger of delayed push of the sharing content defaulted by the server, regular trigger of delayed push of the sharing content submitted by the user, and trigger of the sharing content requested by the second terminal.

In the embodiment, when the preset condition is satisfied, the detecting unit 103 detects whether the second terminal is online. When the second terminal is online, the information sending unit sends the sharing content or the link of the sharing content corresponding to the sharing information to the second terminal. When the second terminal is offline, the information sending unit waits until the second terminal is online to send the sharing content or the link of the sharing content to the second terminal.

In the embodiment, by controlling cloud sharing of the terminal data, the server delays pushing the sharing content corresponding to the sharing information on receiving the delayed response command; when the preset condition is satisfied, the server sends the sharing content or the link of the sharing content corresponding to the sharing information to the second terminal, thereby the user may not miss the shared contents from other users.

As shown in FIG. 6, which is a schematic view of the data processor 20, the data processor 20 includes a recording unit 201 and a record controlling unit 202.

The recording unit 201 is configured to record the live audio and video of the sharing content corresponding to the sharing information.

When the recording unit 201 begins to record the live audio and video of the sharing content, the information sending unit 101 sends feedback information indicating the starting of the recording of the live audio and video to the first terminal.

The detecting unit 103 is configured to detect and receive a stop command sent by the first terminal.

The record controlling unit 202 is configured to stop recording the live audio and video of the sharing content to generate a to-be-shared audiovisual file when receiving the stop command.

In the embodiment, the detecting unit 103 detects the stop command sent by the terminal. When the information receiving unit 102 receives the stop command sent by the first terminal, the record controlling unit 202 stops recording the live audio and video of the sharing content to generate the to-be-shared audiovisual file. In other embodiments, the detecting unit 103 detects a sharing duration controlling command sent by the first terminal. In the case that the record controlling unit 202 receives the sharing duration controlling command sent by the first terminal and a sharing duration corresponding to the sharing duration controlling command is reached, the record controlling unit 202 stops recording the live audio and video to generate the to-be-shared audiovisual file.

The sharing duration can be, for example, 3 hours. If the time point when the recording unit 201 begins to record the audiovisual file of the sharing content is 1: 00 pm, the sharing duration is reached at 4: 00 pm. When the maximum recording duration is reached, the record controlling unit 202 stops recording the live audio and video to generate the to-be-shared audiovisual file. In other embodiments, the sharing duration can be reached at time point 3: 00 pm; when the time point 3: 00 is reached, the record controlling unit 202 stops recording the live audio and video of the sharing content to generate the to-be-shared audiovisual file.

By controlling the cloud sharing of the terminal data, the method of the embodiment is capable of recording the live audio and video of the sharing content corresponding to the sharing information when the user delays watching the sharing content corresponding to the sharing information; capable of stopping recording the live audio and video of the sharing content corresponding to the sharing information to generate the to-be-shared audiovisual file when the sharing duration corresponding to the sharing duration controlling command is reached; capable of sending the to-be-shared audiovisual file or the link of the to-be-shared audiovisual file to the second terminal when the preset condition is satisfied, thereby the user may not miss the sharing contents from other users.

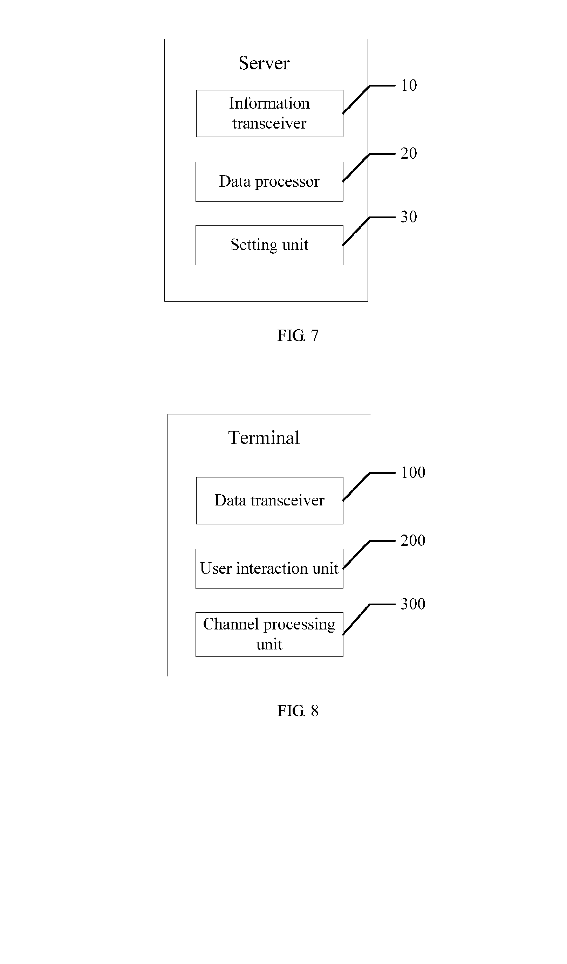

As shown in FIG. 7 which is a schematic view of a server implementing a controlling method for cloud sharing of terminal data in accordance with a second embodiment, based on the first embodiment, the server further includes a setting unit 30 configured to preset a maximum recording duration.

The record controlling unit 202 is configured to stop recording the live audio and video of the sharing content corresponding to the sharing information in the case that the record controlling unit 202 does not receive the stop command and the maximum recording duration is reached.

The maximum recording duration can be, for example, three hours. If the time point when the server begins to record the audiovisual file of the sharing content is 1: 00 pm, then the maximum recording duration is reached at 4: 00 pm. When the maximum recording duration is reached, the server stops recording the live audio and video of the sharing content to generate the to-be-shared audiovisual file. In other embodiments, the maximum recording duration can be reached at 3: 00 pm, when the time point 3: 00 pm is reached, the server stops recording the live audio and video of the sharing content to generate the to-be-shared audiovisual file.

By controlling the cloud sharing of the terminal data, the method of the embodiment is capable of recording the live audio and video of the sharing content when the user delays watching the sharing content; capable of stopping recording the live audio and video of the sharing content to generate the to-be-shared audiovisual file when the maximum recording duration is reached; and capable of sending the to-be-shared audiovisual file or the link of the to-be-shared audiovisual file to the second terminal when the preset condition is satisfied, thereby the user may not miss the sharing contents from other users.

As shown in FIG. 8, which is a schematic view of a terminal implementing a controlling method for cloud sharing of terminal data in accordance with an embodiment, the terminal includes a data transceiver 100, a user interaction unit 200, and a channel processor 300.

The data transceiver 100 is configured to receive the sharing information and the sharing content and send the interaction information.

The user interaction unit 200 is configured to detect, receive and process a processing controlling signal of the sharing information from the user. In the embodiment, the sharing content corresponding to the sharing information can be data shared by any other terminal, for example, one piece of blog, one piece of music, or one segment of video.

The channel processing unit 300 is configured to, when the user interaction unit 200 detects an immediate channel switching command based on the sharing information from the user, extract the channel information from the sharing information to respond to the channel switching operation immediately and send a command indicating immediate response to the sharing information to the server.

The data transceiver 100 is further configured to, when the user interaction unit 200 detects a delayed channel switching command or a delayed page switching command based on the sharing information from the user, send a command indicating delayed response to the sharing information to the server.

In detail, the data transceiver 100 receives the sharing information, and the user interaction unit 200 detects, receives and processes a processing controlling signal of the sharing information from the user (the user sends the command based on the sharing information through remote control operation). When the user interaction unit 200 detects a channel switching command based on the sharing information from the user, the channel processing unit 300 extracts channel information from the sharing information, sends a command indicating immediate response to the sharing information to the server, and at the same time switches the channel. When the user interaction unit 200 detects a delayed channel switching command or a delayed page switching command based on the sharing information from the user, the data transceiver 100 sends a command indicating delayed response to the sharing information to the server. When the user interaction unit 200 detects a response refusing command based on the sharing information from the user, the data transceiver 100 sends a command indicating refused response to the sharing information to the server.

In the embodiment, the way that the channel processing unit 300 switches the channel can be: when the user interaction unit 200 detects the channel switching command based on the sharing information from the user, the channel processing unit 300 extracts a channel name from the sharing information, determines whether the channel corresponding to the channel name is valid; when the channel corresponding to the extracted channel name is valid, the channel processing unit 300 looks up an identification number of the corresponding local channel according to the extracted channel name and switches the current channel to the one corresponding to the identification number; when the channel corresponding to the extracted channel name is invalid, the channel processing unit 300 outputs an alert indicating that the channel switching operation is invalid. The identification number corresponds a playable channel of the terminal. A mapping table reflecting the relationship between each identification number and the corresponding valid channel is restored in the terminal, and the information whether the channel is valid or not is stored in the mapping table. The terminal determines whether the channel corresponding to the extracted channel name is valid by analyzing whether the extracted channel name is in the mapping table.

In the embodiment, by controlling cloud sharing of the terminal data, the server delays pushing the sharing content corresponding to the sharing information on receiving the delayed response command; when the preset condition is satisfied, the server sends the sharing content or the link of the sharing content corresponding to the sharing information to the second terminal, thereby the user may not miss the sharing contents from other users.

Even though information and the advantages of the present embodiments have been set forth in the foregoing description, together with details of the mechanisms and functions of the present embodiments, the disclosure is illustrative only; and that changes may be made in detail, especially in matters of shape, size, and arrangement of parts within the principles of the present embodiments to the full extend indicated by the broad general meaning of the terms in which the appended claims are expressed.

## Claims

1. A controlling method for cloud sharing of terminal data, comprising following steps:
a server receiving sharing information sent by a first terminal, sending the sharing information to a second terminal, and receiving interaction information sent by the second terminal;
the sever delaying pushing sharing content corresponding to the sharing information when the sharing information received by the server is a delayed response command; and
when a preset condition is satisfied, the server sending the sharing content or a link of the sharing content corresponding to the sharing information to the second terminal.

2. The controlling method of claim 1, wherein the preset condition comprises regular trigger of delayed push of the sharing content defaulted by the server, regular trigger of delayed push of the sharing content submitted by user, or trigger of the sharing content requested by the second terminal.

3. The controlling method of claim 1, further comprising following steps after the step that the sever delaying pushing sharing content corresponding to the sharing information when the sharing information received by the server is a delayed response command:
the server recording live audio and video of the sharing content corresponding to the sharing information; and
the server detecting a stop command sent by the first terminal, and stopping recording the live audio and video of the sharing content corresponding to the sharing information on receiving the stop command.

4. The controlling method of claim 3, further comprising the following step after the step that the server recording live audio and video of the sharing content corresponding to the sharing information:
in the case that the server does not receive the stop command and a maximum recording duration preset by the server is reached, the server stopping recording the live audio and video of the sharing content corresponding to the sharing information to generate a to-be-shared audiovisual file.

5. The controlling method of claim 3, further comprising the following step after the step that the server recording live audio and video of the sharing content corresponding to the sharing information:
the server detecting a sharing duration controlling command sent by the first terminal; when a sharing duration corresponding to the sharing duration controlling command is reached, the server stopping recording the live audio and video of the sharing content corresponding to the sharing information to generate a to-be-shared audiovisual file.

6. The controlling method of claim 3, further comprising the following step before the step that the server recording live audio and video of the sharing content corresponding to the sharing information:
the server sending feedback information which indicates the starting of the recording of the live audio and video of the sharing content corresponding to the sharing information to the first terminal.

7. The controlling method of claim 1, wherein the step that when a preset condition is satisfied, the server sending the sharing content or a link of the sharing content corresponding to the sharing information to the second terminal comprises:
the server detecting whether the second terminal is online;
when the second terminal is online, the server sending the sharing content or the link of the sharing content corresponding to the sharing information to the second terminal; when the second terminal is offline, the server waiting until the second terminal is online to send the sharing content or the link of the sharing content corresponding to the sharing information to the second terminal.

8. The controlling method of claim 1, further comprising the following step before the step that the sever delaying pushing sharing content corresponding to the sharing information when the sharing information received by the server is a delayed response command:
the second terminal detecting, receiving, and processing a processing controlling signal of the sharing information from user;
when detecting an immediate channel switching command or an immediate page switching command based on the sharing information from user, the second terminal extracting channel information or connection information from the sharing information to switch the channel or page and sending a command indicating immediate response to the sharing information to the server;
when detecting a delayed channel switching command or a delayed page switching command based on the sharing information from user, the second terminal sending a command indicating delayed response to the sharing information to the server.

9. The controlling method of claim 8, wherein the step that when detecting an immediate channel switching command or an immediate page switching command based on the sharing information from user, the second terminal extracting channel information or connection information from the sharing information comprises:
when detecting the immediate channel switching command or the immediate page switching command based on the sharing information from user, the second terminal extracting a channel name from the sharing information and determining whether the channel corresponding to the extracted channel name is valid;
when the channel corresponding to the extracted channel name is valid, the second terminal looking up an identification number of a local channel according to the extracted channel name and switching the current channel to the one corresponding to the identification number.

10. The controlling method of claim 9, further comprising the following step after the step that when detecting the immediate channel switching command or the immediate page switching command based on the sharing information from user, the second terminal extracting a channel name from the sharing information and determining whether the channel corresponding to the extracted channel name is valid:
when the channel corresponding to the extracted channel name is invalid, the second terminal outputting an alert indicating that the channel switching operation is invalid.

11. A server applied to the controlling method of claim 1, wherein the server comprises an information transceiver and a data processor; the information transceiver comprises an information sending unit and an information receiving unit;
the information sending unit is configured to send the sharing information to the second terminal when the information receiving unit receives the sharing information sent by the first terminal;
the information receiving unit is configured to receive the interaction information sent by the second terminal;
the data processor is configured to delay pushing the sharing content corresponding to the sharing information when the received interaction information is the delayed response command; and
the information sending unit is further configured to send the sharing content or the link of the sharing content corresponding to the sharing information to the send terminal when the preset condition is satisfied.

12. The server of claim 11, wherein the preset condition comprises regular trigger of delayed push of the sharing content defaulted by the server, regular trigger of delayed push of the sharing content submitted by user, or trigger of the sharing content requested by the second terminal.

13. The server of claim 11, wherein the data processor comprises a recording unit and a record controlling unit, the information transceiver further comprises a detecting unit; the recording unit is configured to record live audio and video of the sharing content corresponding to the sharing information; the detecting unit is configured to detect and receive a stop command sent by the first terminal; the record controlling unit is configured to stop recording the live audio and video of the sharing content corresponding to the sharing information to generate a to-be-shared audiovisual file on receiving the stop command.

14. The server of claim 13, further comprising a setting unit; the setting unit is configured to preset a maximum recording duration; the record controlling unit is further configured to stop recording the live audio and video of the sharing content corresponding to the sharing information to generate the to-be-shared audiovisual file in the case that the server does not receive the stop command and the maximum recording duration is reached.

15. The server of claim 13, wherein the detecting unit is further configured to detect and receive a sharing duration controlling command sent by the first terminal; the record controlling unit is configured to stop recording the live audio and video of the sharing content corresponding to the sharing information to generate the to-be-shared audiovisual file when the sharing duration controlling command is received and a sharing duration corresponding to the sharing duration controlling command is reached.

16. The server of claim 13, wherein the information sending unit is further configured to send feedback information to the first terminal indicating the starting of the recording of the live audio and video of the sharing content corresponding to the sharing information.

17. The server of claim 13, wherein the detecting unit is configured to detect whether the second terminal is online; when the second terminal is online, the information sending unit is configured to send the sharing content or the link of the sharing content corresponding to the sharing information to the second terminal; when the second terminal is offline, the information sending unit is configured to wait until the second terminal is online to send the sharing content or the link of the sharing content to the second terminal.

18. A terminal applied to the controlling method of claim 1, wherein the terminal comprises:
a data transceiver, configured to receive sharing information and sharing content and send interaction information;
a user interaction unit, configured to detect, receive, and process a processing controlling signal of the sharing information from user;
a channel processing unit, configured to extract channel information from the sharing information and immediately respond to the channel switching operation when an immediate channel switching command based on the sharing information from user is detected, and send a command indicating immediate response to the sharing information to the server; and
the data transceiver is further configured to send a command indicating delayed response to the sharing information to the server when a delayed channel switching command or a delayed page switching command based on the sharing information from user is received.

19. The terminal of claim 18, wherein the channel processing unit is further configured to extract a channel name from the sharing information and determines whether the channel corresponding to the channel name is valid when the data transceiver detects a channel switching command based on the sharing information from user; when the channel corresponding to the channel name is valid, the channel processing unit looks up an identification number of a local channel according to the channel name, and switches the current channel to the one corresponding to the identification number.

20. The terminal of claim 19, wherein the channel processing unit is further configured to output an alert indicating that the channel switching operation is invalid when the channel corresponding to the channel name is invalid.
